**Europäisches Patentamt**

**European Patent Office**

**Office européen des brevets**

(19)

(11) Veröffentlichungsnummer: **0 408 910 A2**

# (12) EUROPÄISCHE PATENTANMELDUNG

(21) Anmeldenummer: **90111527.9**

(22) Anmeldetag: **19.06.90**

(51) Int. Cl.5: **F01N 3/22**, F01N 3/30

(30) Priorität: **15.07.89 DE 3923517**

(43) Veröffentlichungstag der Anmeldung:
**23.01.91 Patentblatt 91/04**

(84) Benannte Vertragsstaaten:
**DE FR GB IT SE**

(71) Anmelder: **Dr.Ing.h.c. F. Porsche Aktiengesellschaft Porschestrasse 42 D-7000 Stuttgart 40(DE)**

(72) Erfinder: **Ampferer, Herbert, Dipl.-Ing. Metternzimmerstrasse 24 D-7123 Sachsenheim 2(DE)**
Erfinder: **Schneider, Klaus, Dipl.-Ing. Tiefenbronner Strasse 28 D-7533 Tiefenbronn-Mühlhausen(DE)**

(54) **Abgasanlage eines Hubkolbenmotors.**

(57) In das Abgasrohr eines Hubkolbenmotors ist ein Metallträger-Katalysator eingesetzt. Der Katalysator besteht aus zwei auf Abstand zueinander liegenden, mit Mantelrohren umgebenen Monolithen, die zueinander koaxial in Sicken und Einbördelungen des Außenmantels mit Schiebesitz zentriert sind. An einer Luftzuführungsstelle zwischen den Sicken des Außenmantels wird im unteren Drehzahlbereich des Motors Luft zwischen die beiden Monolithen eingeleitet, um eine Nachreaktion der Abgase zu erzielen.

FIG.1

EP 0 408 910 A2

## ABGASANLAGE EINES HUBKOLBENMOTORS

Die Erfindung betrifft eine Abgasanlage eines mehrzylindrigen Hubkolbenmotors nach dem Oberbegriff des Anspruchs 1.

Eine derartige Abgasanlage ist in **DE-OS 24 01 287** beschrieben. Um eine Überhitzung des Katalysators zu vermeiden, wird oberhalb einer bestimmten Abgastemperatur in seinen Außenmantel Luft eingeblasen. Die von einer Druckluftquelle ausgehende Luft strömt über ein Umschaltventil an der einen Seite in den Außenmantel des Katalysators ein, strömt außen am Katalysatormonolith entlang und vermischt sich hinter dem Monolith mit dem aus ihm ausströmenden Ausgas. Auf diese Weise wird die Oxydation des Abgases unterstützt. Das Einleiten der Luft an der einen Katalysatorseite kann dazu führen, daß sich der Katalysator durch den "Kälteschock" verbiegt und funktionsunfähig wird.

Es ist die Aufgabe der Erfindung, eine solche Abgasanlage so zu gestalten, daß der Katalysator durch das Einleiten der Luft keinen Schaden nimmt und eine wirksame Nachreaktion der Abgase erzielt wird.

Zur Lösung dieser Aufgabe dienen die kennzeichnenden Merkmale des Anspruchs 1. Wenn die Luftzuführungsstelle etwa mittig zwischen zwei gesondert hergestellten, von einem Außenmantel des Katalysators umschlossenen Monolithen liegt, kann die Luft in den Katalysator einströmen, ohne ihn durch eine zu heftige Kühlung der Gefahr einer Beschädigung auszusetzen. Durch die in den Unteransprüchen formulierten weiteren konstruktiven Maßnahmen wird diese Gefahr soweit eingedämmt, daß die Funktionssicherheit des Katalysators bei allen möglichen Betriebszuständen des Motors gewährleistet ist und zugleich eine kostengünstige Herstellung des Katalysators sichergestellt ist.

Ein Ausführungsbeispiel der Erfindung ist in der Zeichnung dargestellt und wird nachfolgend erläutert.

Es zeigt

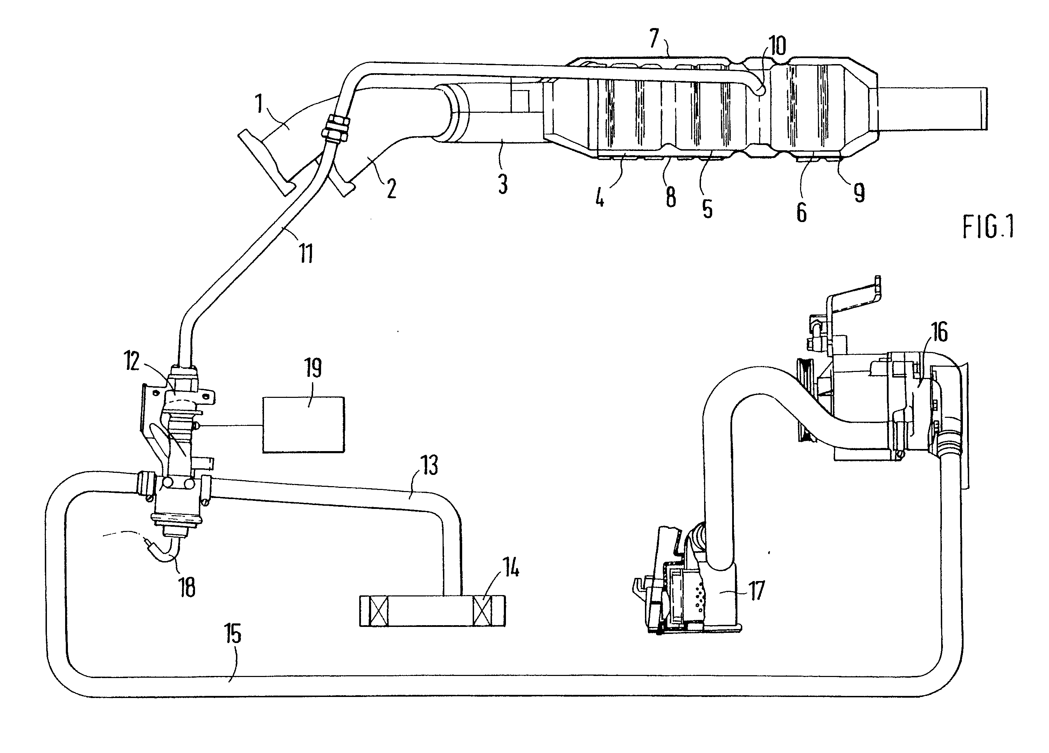

Fig. 1 Hubkolbenmotor mit Abgasanlage und Katalysator,

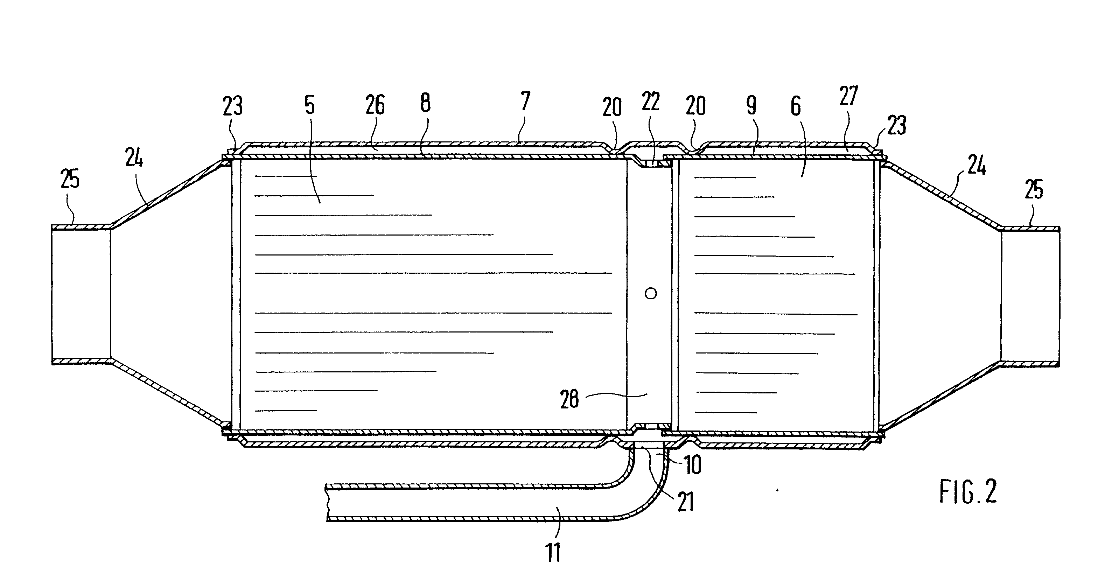

Fig. 2 eine vergrößerte Darstellung des Katalysators im Längsschnitt.

Zwei Abgasleitungen 1 und 2 eines zeichnerisch nicht dargestellten Hubkolbenmotors sind an ein gemeinsames Abgasrohr 3 angeschlossen, in das zur Abgasreinigung ein Katalysator 4 eingesetzt ist. Der Katalysator 4 besteht aus zwei Metallträger-Monolithen 5 und 6, die koaxial auf Abstand zueinander liegend angeordnet und von einem gemeinsamen Außenmantel 7 umschlossen sind. Die Monolithe 5, 6 sind mit Mantelrohren 8 und 9 umgeben, an deren ineinander zentrierten Enden eine Luftzuführungsstelle 10 zum Katalysator 4 liegt. Die Luftzuführungsstelle 10 wird mit einer Luftleitung 11 über ein elektro-pneumatisches Umschaltventil 12 mit Luft versorgt. Vom Umschaltventil 12 führt eine zweite Luftleitung 13 zum Luftfilter 14 des Hubkolbenmotors, eine dritte Luftleitung 15 zu einer mit Elektromotor angetriebenen Luftpumpe 16, die über einen Luftfilter 17 Umgebungsluft ansaugt.

Eine Steuerluftleitung 18 führt vom Umschaltventil 12 zum Ansaugrohr des Hubkolbenmotors. Das Umschaltventil 12 ist als Taktventil ausgebildet, reagiert auf Signale der Motronic 19 des Hubkolbenmotors und wird durch den über die Steuerluftleitung 18 anliegenden Unterdruck des Motor-Ansaugrohres betätigt. Im unteren Drehzahlbereich des Motors, bei Drosselklappenwinkeln von 0 bis ca. 7° gibt das Umschaltventil den Weg zur ersten Luftleitung 11 frei, so daß an der Luftzuführungsstelle 10 Zusatzluft in den Katalysator 4 gelangt. Bei höheren Drosselklappenwinkeln und Motordrehzahlen verschließt das Umschaltventil die Luftleitung 11 und öffnet die Luftleitung 13 zum Luftfilter des Hubkolbenmotors.

Die Luftzuführungsstelle 10 zum Katalysator 4 liegt zwischen zwei radial nach innen weisenden Sicken 20 des Außenmantels 7. Sie wird gebildet durch eine radiale Bohrung 21 des Außenmantels 7, einen Ringkanal 21' und mehrere radiale Bohrungen 22 des längeren Mantelrohres 8, das im kürzeren Mantelrohr 9 mit Schiebesitz zentriert ist. Die beiden äußeren Enden der Mantelrohre 8 und 9 sind in radialen Einbördelungen 23 des Außenmantels 7 mit Schiebesitz zentriert. Bei temperaturbedingten Längenänderungen können sich die beiden Mantelrohre 8 und 9 sowohl gegeneinander als auch gegenüber dem Außenmantel 7 frei dehnen.

Die Mantelrohre sind aus zylindrischen Rohrabschnitten, sich daran anschließenden konisch verengenden Rohrabschnitten 24 und endseitigen zylindrischen Rohrstücken 25 zusammengesetzt. Da die Mantelrohre 8, 9 in Sicken 20 und Einbördelungen 23 des Außenmantels 7 abgedichtet zentriert sind, werden zwischen den Mantelrohren 8, 9 und dem Außenmantel 7 wärmeisolierende Luftspalte 26, 27 gebildet. Die abgedichteten Sicken verhindern, daß heiße Abgase in die Luftspalte 26, 27 eindringen und den erwünschten Isoliereffekt beseitigen können.

Über die Luftzuführungsstelle 10 gelangt im unteren Drehzahlbereich des Motors Luft in den Zwischenraum 28 zwischen den beiden Monolithen 5 und 6. Mit dieser Luft wird vor allem in dem kürzeren Monolithen 6, der strömungs-und lagebedingt etwas kühler als der längere Monolith 5 ist, als Nachreaktion eine Reduktion bzw. Oxydation der Abgase erreicht.

## Ansprüche

1. Abgasanlage eines Hubkolbenmotors mit einem gemeinsamen Abgasrohr, an das die Abgasleitungen der Zylinder angeschlossen sind und in das ein Katalysator zur Reinigung der Abgase eingesetzt ist, wobei dem Katalysator über ein Umschaltventil bei bestimmten Betriebszuständen des Motors zur Nachreaktion der Abgase Luft von außen über ein Umschaltventil zugeführt wird, **dadurch gekennzeichnet**, daß die Luftzuführungsstelle (10) etwa mittig zwischen zwei gesonderten Monolithen (5 und 6) des Katalysators (4) liegt, wobei die Monolithe (5 und 6) von einem gemeinsamen Außenmantel (7) des Katalysators (4) umschlossen sind.

2. Abgasanlage nach Anspruch 1, **dadurch gekennzeichnet**, daß die Monolithe (5 und 6) von Mantelrohren (8 und 9) umschlossen sind und daß die Luftzuführungsstelle (10) durch radiale Öffnungen (21 und 22) des Außenmantels (7) und des einen Mantelrohres (8) gebildet wird, durch die hindurch Luft in den Zwischenraum (28) zwischen den Monolithen (5 und 6) eingeleitet wird.

3. Abgasanlage nach Anspruch 1 und 2, **dadurch gekennzeichnet**, daß der Außenmantel (7) beidseitig zur Luftzuführungsstelle (10) nach innen gewölbte Sicken (20) aufweist, in denen die einander benachbarten inneren Enden der Mantelrohre (8 und 9) abgedichtet, mit Schiebesitz zentriert sind.

4. Abgasanlage nach Anspruch 3, **dadurch gekennzeichnet**, daß die beiden äußeren Enden der Mantelrohre (8 und 9) mit Schiebesitz in radialen Einbördelungen (23) des Außenmantels (7) so gehalten sind, daß zwischen den Mantelrohren (8 und 9) und dem Außenmantel (7) wärmeisolierende Luftspalte (26 und 27) mit ruhender Luft gebildet sind.

5. Abgasanlage nach Anspruch 3 und 4, **dadurch gekennzeichnet**, daß das innere Ende des einen, längeren Mantelrohres (8) im inneren Ende des anderen, kürzeren Mantelrohres (9) mit Schiebesitz zentriert ist.

6. Abgasanlage nach einem der Ansprüche 2 bis 5, **dadurch gekennzeichnet**, daß die beiden Mantelrohre (8, 9) jeweils aus innerhalb des Außenmantels (7) sich erstreckenden, prismatischen Rohrabschnitten, sich daran anschließenden, konisch verjüngenden Rohrabschnitten (24) sowie aus an ihnen angeformten, zylindrischen Rohrstücken zusammengesetzt sind.

7. Abgasanlage nach Anspruch 1, **dadurch gekennzeichnet**, daß als Katalysator (4) ein Metallträger-Katalysator verwendet ist.

FIG.1

FIG. 2